# EUROPEAN PATENT SPECIFICATION

(11) **EP 1 737 798 B1**
(45) Date of publication and mention of the grant of the patent: **09.07.2008**
(21) Application number: 05714862.9
(22) Date of filing: 29.03.2005
(51) Int. Cl.: C03B 9/453

(54) **TRANSFERRING ELEMENT OF A PUSHER MECHANISM OF A GLASS FORMING MACHINE**
ÜBERTRAGUNGSELEMENT EINES ABSTREIFERMECHANISMUS EINER GLASFORMMASCHINE
ELEMENT DE TRANSFERT D'UN MECANISME POUSSEUR DE MACHINE DE FAÇONNAGE DE VERRE

(30) Priority: 19.04.2004 CZ 20040513
(43) Date of publication of application: 03.01.2007
(73) Proprietor: Sklostroj Turnov CZ, S.R.O., 511 01 Turnov (CZ)
(72) Inventor: COUFAL, Martin, 294 21 Belá pod Bezdezem (CZ); KUBAT, Jaroslav, . (CZ)
(74) Representative: Andera, Jiri
(86) International application number: PCT/CZ2005/000030
(87) International publication number: WO 2005/100271

(56) References cited:
- US-A- 5 527 372
- US-A- 5 733 354
- US-B1- 6 494 063
- US-B1- 6 601 410

## Description

### Technical Field

The invention concerns a transferring element of a pusher mechanism of a glass forming machine comprising at least one jaw with a base and an arm while a nozzle for feeding of pressurized air from a central source leads to the area of the jaw.

### Background Art

Pusher mechanism of a glass forming machine is used to move formed glass products or groups of products from the fixed dead plate of the glass forming machine to a moving conveyor belt. For this purpose the pusher mechanism is provided with a transferring element the task of which is to grasp glass products on the dead plate of the glass forming machine and to transfer them to a moving conveyor belt along a pre-defined path.

Depending on the number of glass products that are to be transferred at the same time the transferring element of the pusher mechanism of the glass forming machine is equipped with the corresponding number of jaws. Each jaw has its base from which the arm for grasping the products protrudes. The arm usually forms an angle of 90° with the base.

Document US 5,527,372 discloses a transferring element of a pusher mechanism provided with jaws comprising of several arms that protrude from a common base. The arms represent integral parts of the base and this is why they cannot be rearranged. Each arm is equipped with a nozzle for directing pressurized air horizontally against the product in such a way that a greater part of the flowing air is routed over the surface of the transferred product horizontally along the corner between the arm and base of each jaw. A smaller part of the flowing air is routed over the surface of the product horizontally on the opposite side of the product. The flowing air that flows round the product in the horizontal direction exerts a force on the product that holds the product in the corresponding jaw. This solution only uses horizontal flowing along the product to exert the retaining force.

A disadvantage of this solution is the limited area of the product that can be actively used for the exertion of the retaining force. The size of this active area depends on the horizontal dimension of the product and not on its vertical dimension.

Another disadvantage of this solution is the impossibility of adjusting the position of the arms to adapt the transferring element to product changes, i.e. changing sizes and shapes of transferred products. Desired changes can only be achieved through replacement of the whole transferring element produced exclusively for a particular product type.

The solution according to the above-mentioned document US 5,527,372 has been used as the basis for another known embodiment of the transferring element of a pusher mechanism, which is published in document US 5,733,354. This solution also uses pressurized air to exert retaining force onto the product. Each jaw is equipped with two nozzles that act exclusively in the horizontal direction and they are routed in such a way that the stream of pressurized air leaving the nozzles can consequently push the product into the jaws. The jaws and their holder form one whole. This transferring element is mainly designed for smaller products.

The solution according to the document US 5,733,354 has the same disadvantages as the solution of document US 5,527,372. This means that the area of the product that can be used for exertion of retaining force only depends on the horizontal dimension of the product and not on its vertical dimension. Another disadvantage also comprises in the double number of required nozzles of pressurized air.

Apparatus according to US 6 494 063 serves for pushing at least one of two hollow glass articles from a dead plate of a glass forming machine onto a conveyor belt. A pusher serves for this purpose, and includes a base portion and, for each glass article which is to be pushed, at least one thrust finger extending transversely to the base portion. Each thrust finger defines with the base portion a pocket for receiving the glass article. A nozzle is arranged in the region of a corner of the associated pocket. From each nozzle compressed air can be blown such that a pressure below atmospheric pressure which draws the glass article into the pocket is created between the pusher and the glass article. The compressed air is blown from the corner out between the base portion and the glass article.

Device according to US 6 601 410 comprises a transfer mechanism which is attached to the free ends of two parallel piston rods. The associated piston-cylinder units are attached to a support structure and can be pivoted therewith in a reciprocating manner about a vertical axis by an angle of approximately 105 DEG between a dead plate and a conveyor belt. Compressed air nozzles for the purpose of producing negative pressure in corners of the transfer mechanism are supplied with compressed air from a first advance chamber by way of a supply duct of the transfer mechanism and one of the piston rods and the associated piston. This is performed by way of a first directional control valve from a first compressed air source of relatively low pressure. The transfer mechanism is advanced by virtue of the piston-cylinder unit by way of a second directional control valve from a second compressed air source of relatively high pressure. The transfer mechanism is retracted by influencing retraction chambers with compressed air which is taken from the second compressed air source by way of a third directional control valve.

### Disclosure of Invention

The above-mentioned shortcomings are negated by a transferring element of a pusher mechanism of a glass forming machine comprising at least one jaw with a base and an arm while a nozzle for feeding of pressurized air from a central source leads to the area of the jaw, the nozzle (23) is arranged in the corner between the base (12) and the arm (13) according to the invention, the principle of which comprises of the fact that the nozzle is arranged in the lower part of the corner and is directed upwards, parallel to the arm

The advantage of the transferring element according to this invention is the possibility to exert a much greater retaining force than in the case of the known mechanisms with horizontal blowing.

To facilitate easy adaptation of the transferring element to various products it is advantageous if the jaw is mounted on a holder in an adjustable way.

In a preferred embodiment, the holder is equipped with at least one horizontal clamping form groove in which a nut of a clamping bolt is installed in an adjustable way to ensure adjustable clamping of the jaw to the holder.

In another preferred embodiment, the nozzle is connected to a distribution channel in the jaw, which is connected to a distribution channel in the holder via a distribution space.

To reduce negative impacts of hot products to the jaw, the jaw base is equipped with a replaceable lateral contact insert and the jaw arm is equipped with a replaceable front contact insert.

### Brief Description of Drawings

The invention will be described in detail with the use of drawings where fig. 1 schematically presents an embodiment of the transferring element according to the invention. In figs. 2 and 3 this transferring element is presented together with a dead plate and conveyor belt, including representation of transferred glass products. Fig. 4 presents detail of an embodiment of one jaw of the transferring element. Fig. 5 presents the transferring element with various alternatives of design of the jaw. Fig. 6 shows the transferring element with examples of the shape of transferred products. Fig. 7 presents a schematic graphic representation of the area that pressurized air acts on.

### Modes for Carrying Out the Invention

The pusher mechanism of a glass forming machine is used to transfer formed glass products 2 or groups of products 2 from the fixed dead plate 1 of the glass forming machine on a moving conveyor belt 3. Various design alternatives of the pusher mechanism are well-known and they will not be described in detail since the invention deals with the transferring element of the pusher mechanism only. This is why it is just the transferring element 10 of the pusher mechanism that is displayed in the drawings.

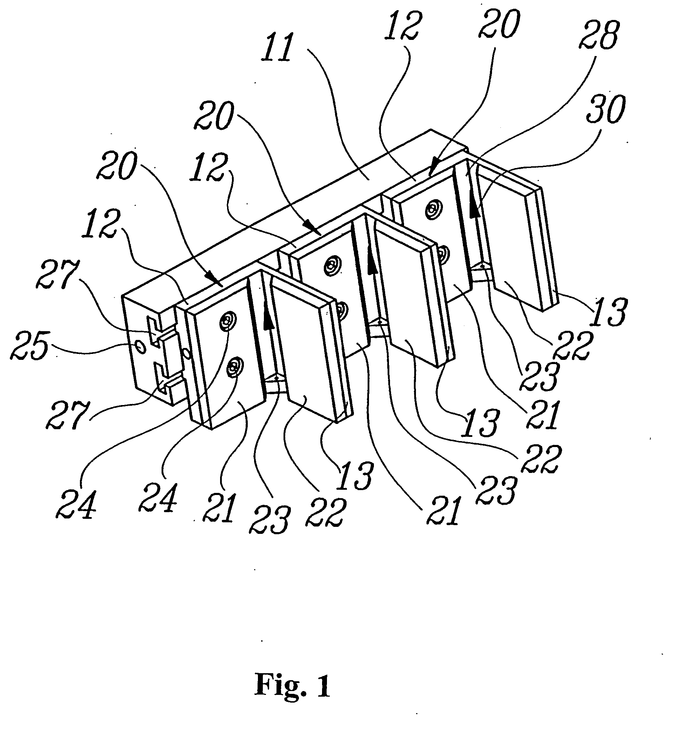

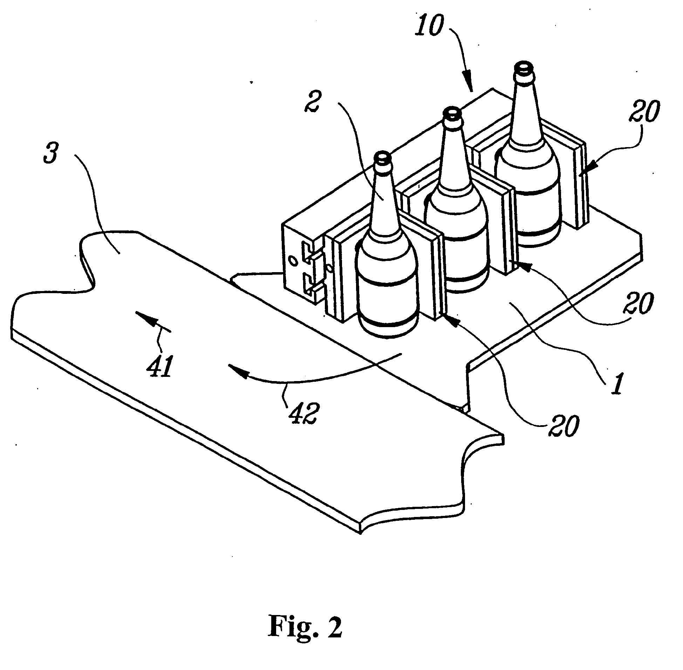

Figs. 1 to 3 present a transferring element 10 designed for transferring three products 2 (glass bottles) at the same time from the fixed dead plate 1 to the conveyor belt 3 which moves in the direction indicated by the arrow 41 (see fig. 2).
Fig. 2 also shows the direction 42 of the movement of products 2 during transferring.

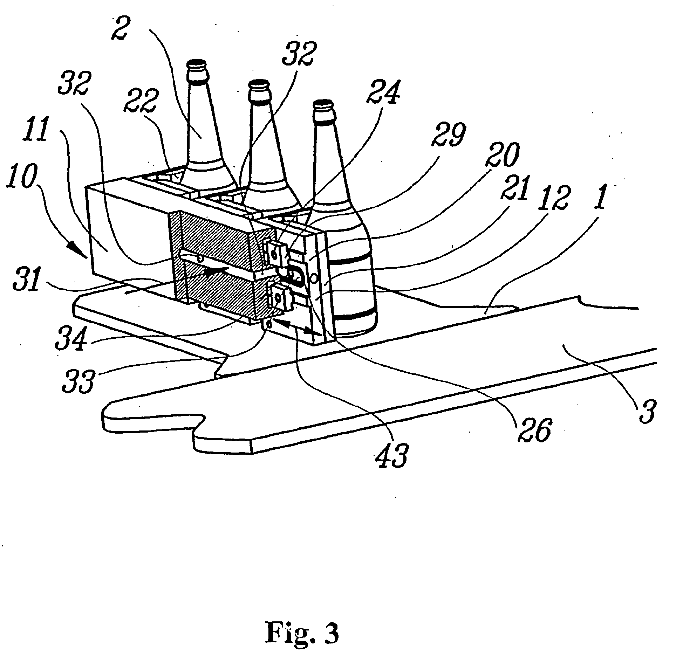

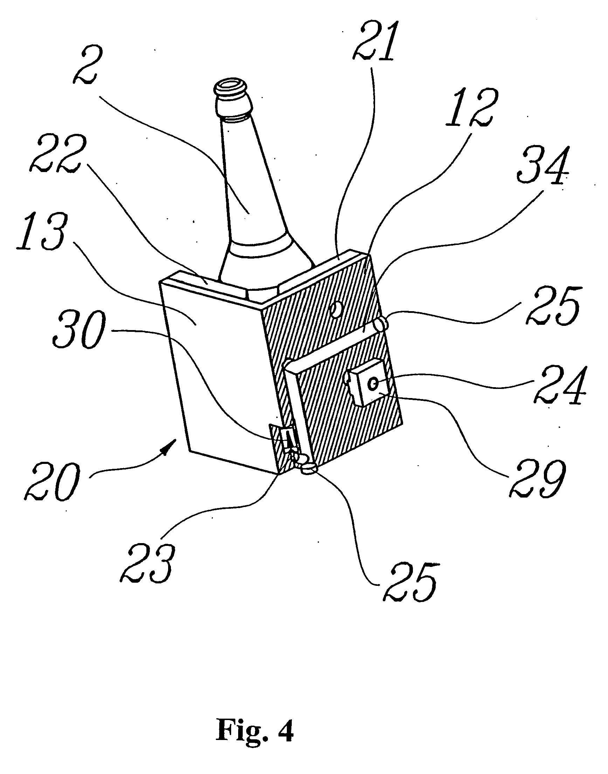

The transferring element 10 according to figs 1 to 3 comprises of a holder 11 that has two clamping form grooves 27 arranged in parallel above each other for adjustable installation of the jaw 20. In the clamping form grooves 27 there are square nuts 29 (see figs. 3 and 4) into which fixing bolts 24 are screwed that hold the jaws 20 in a selected place on the holder 11 after tightening.

Each jaw 20 has a base 12 and an arm 13 arranged in a perpendicular way to it. The base 12 of the jaw 20 is equipped with a replaceable lateral contact insert 21 and the arm 13 of the jaw 20 is equipped with a replaceable front contact insert 22. The replaceable contact inserts 21, 22 are made of heat-resistant material and they protect the hot glass product 2 from being damaged by the jaw 20.

In its lower part between the base 12 and arm 13 each jaw 20 is equipped with a nozzle 23 that is oriented upwards, parallel to the arm 13 and product axis 2.

Each nozzle 23 is connected through a distribution channel 34 in the jaw 20 to the distribution space 33 of an elongated shape into which the corresponding outlet from the common distribution channel 32 created in the holder 11 leads. The elongated shape of the distribution space 33 makes it possible for the distribution channel 34 in the jaw 20 to be connected to the distribution channel 32 in the holder 11 even if the jaw 20 is moved in the adjustment direction 43 (see fig. 3). The distribution space 33 is sealed with a gasket 26 along the perimeter. Pressurized air is brought to the distribution channel 32 in the holder 11 through the central supply line 31. Technological borings that are necessary for the production of channels are blinded with plugs.

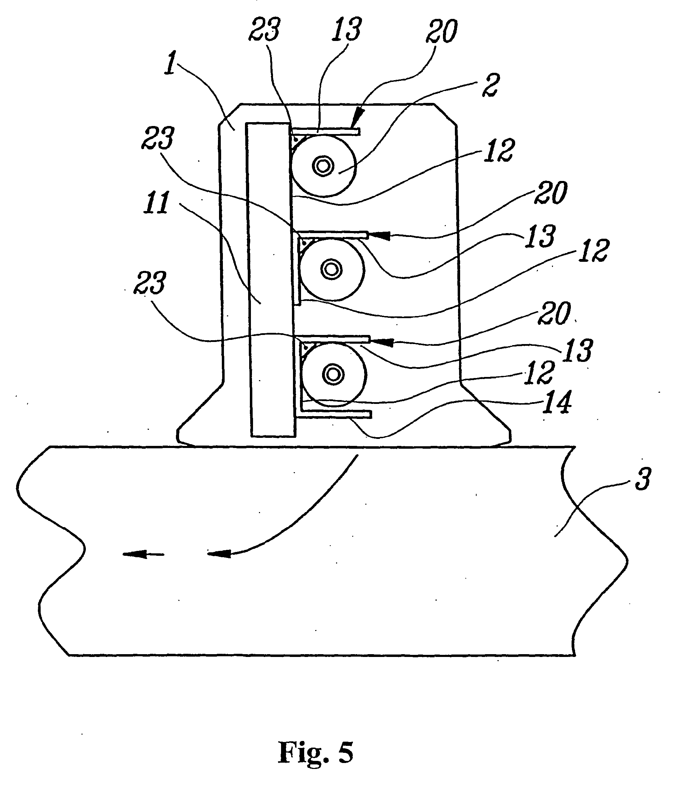

The transferring element 10 according to figs 1 to 3 is equipped with L-shaped jaws 20 that are fixed to the holder 11 in an adjustable way and have a base 12 and an arm 13 that is oriented in the perpendicular direction to the base 12. However, fig. 5 shows that the jaws 20 can also be U-shaped as besides the arm 13 there is an auxiliary arm 14 connected to the base 12. In another embodiment according to fig. 5 the arm 13 is connected directly to the holder 11 so the holder body 11 directly forms the base 12 of this jaw 20.

Experts will understand that the nozzle 23 according to the invention can be also used in transferring elements 10 where the jaws 20 are connected to the holder 11 in a fixed way or where the jaws 20 and the holder 11 are made of one piece of material.

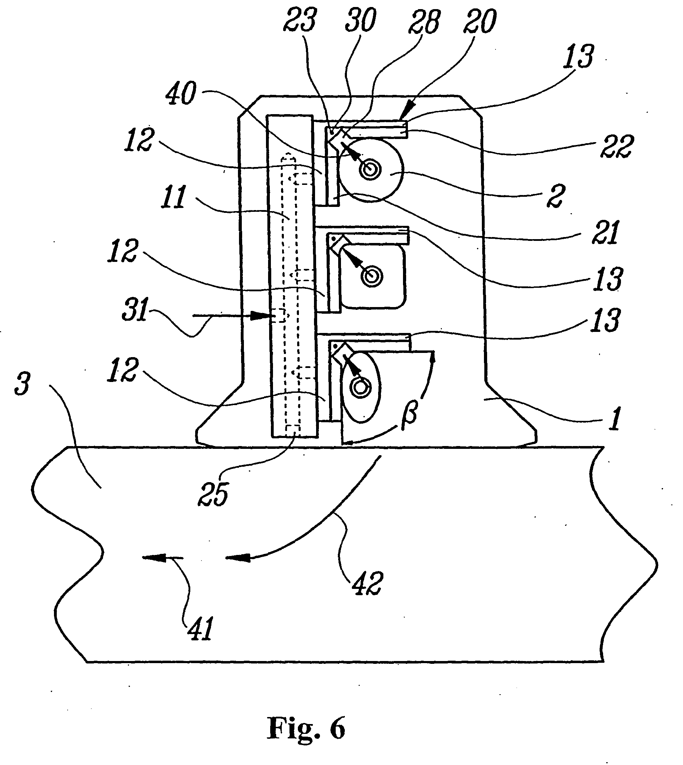

When the jaw 20 contacts a product 2, the corner between the base 12 and the arm 13 forms a vacuum channel 28 (see fig. 6) in the lower part of which the nozzle 23 is installed. Cross section of the vacuum channel 28 can be modified by forming of the base 12 and arm 13 of the jaw 20 or by forming of the replaceable contact inserts 21, 22.

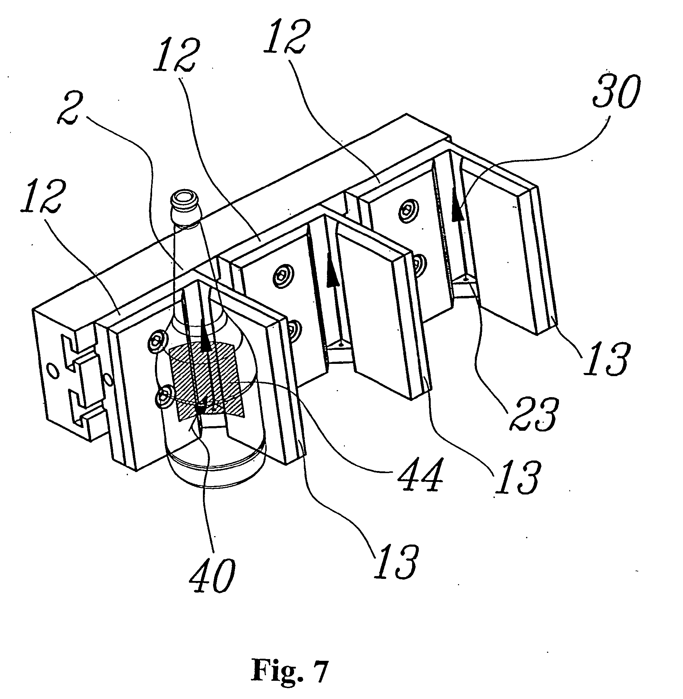

When the jaws 20 come into contact with products 2 on the dead plate 1, pressurized air is routed from a source (not shown) via a central supply line 31 to the distribution channel 32 in the holder 11. Pressurized air is routed through the distribution channel 32 in the holder 11 to the distribution channels 34 in the jaws 20. Then, in each jaw 20 pressurized air leaves the nozzle 23 and flows upwards through the vacuum channel 28 formed by the walls of the jaw 20 in the corner between the base 12 and arm 13 and the side wall of the product 2. This vertical stream 30 of air (see figs. 1 and 7) is parallel to the vertical axis of the product 2. In the nozzle 23 the speed of the air stream 30 increases considerably, which results in a drop of the total air pressure in the area after the nozzle 23, i.e. in the vacuum channel 28. The result of this phenomenon is force 40 that draws the product 2 into the jaw 20.

The force 40 exerted by the vertical stream 30 of air is higher than the one in the case of known structures with horizontal blowing as the air stream 30 flows vertically around the product 2 and acts on a larger area 44 of the product 2 (see fig. 7).

The inlet of pressurized air to the transferring element 10 is closed when the transferring element 10 with the jaws 20 has transferred the products 2 in the direction 42 (see fig. 2) from the fixed dead plate 1 onto the moving conveyor belt 3. Due to the interruption of the supply of pressurized air, the force 40 that drew the products 2 into the jaws 20 ceases to act, so the products 2 can be carried by the conveyor belt 3 to the next production operation.

Experts find it evident that the transferring element 10 according to the invention can also transfer products 2 with a non-circular cross-section. Examples of such products are presented schematically in fig. 6. The angle β (see fig. 6) between the arm 13 of the jaw 20 and the base 12 of the jaw 20 is generally 90°. Of course, with atypical shapes of products 2 jaws 20 with another angle β can be used.

## Claims

1. A transferring element of a pusher mechanism of a glass forming machine comprising at least one jaw (20) with a base (12) and an arm (13) while a nozzle (23) for feeding of pressurized air from a central source (31) leads to the area of the jaw (20), the nozzle (23) is arranged in the corner between the base (12) and the arm (13), **characterized in that** the nozzle (23) is arranged in the lower part of the corner and is directed upwards, parallel to the arm (13).

2. The transferring element according to claim 1, **characterized in that** the jaw (20) is adjustably mounted to a holder (11).

3. The transferring element according to claim 2, **characterized in that** the holder (11) is provided with at least one horizontal clamping form groove (27) in which a nut (29) is installed in an adjustable way to hold the fixing screw (24) for an adjustable attachment of the jaw (20) to the holder (11).

4. The transferring element according to any of the claims 2 and 3, **characterized in that** the nozzle (23) is connected to a distribution channel (34) in the jaw (20) and the distribution channel (34) of the jaw (20) is connected to a distribution channel (32) in the holder (11) via a distribution space (33).

5. The transferring element according to any of the claims 1 to 4, **characterized in that** the base (12) of the jaw (20) is provided with a replaceable lateral contact insert (21) and that the arm (13) of the jaw (20) is provided with a replaceable front contact insert (22).

## Patentansprüche

1. Übertragungselement eines Abstreifermechanismus einer Glasformmaschine, welches wenigstens eine Backe (20) mit einer Grundplatte (12) und einem Arm (13) umfasst, während eine Düse (23) zum Zuführen von mit Druck beaufschlagter Luft aus einer zentralen Versorgung (31) zu dem Bereich der Backe (20) führt, wobei die Düse (23) in der Ecke zwischen der Grundplatte (12) und dem Arm (13) angeordnet ist,
**dadurch gekennzeichnet, dass** die Düse (23) im unteren Teil der Ecke angeordnet und parallel zu dem Arm (13) nach oben ausgerichtet ist.

2. Übertragungselement nach Anspruch 1, **dadurch gekennzeichnet, dass** die Backe (20) verstellbar an einer Halterung (11) angebracht ist.

3. Übertragungselement nach Anspruch 2, **dadurch gekennzeichnet, dass** die Halterung (11) mit wenigstens einem horizontalen Spannprofilschlitz (27) versehen ist, in dem eine Mutter (29) verstellbar zum Halten einer Befestigungsschraube (24) zur verstellbaren Befestigung der Backe (20) an die Halterung (11) installiert ist.

4. Übertragungselement nach einem der Ansprüche 2 und 3,
**dadurch gekennzeichnet, dass** die Düse (23) mit einer Verteilerleitung (34) in der Backe (20) verbunden ist, während die Verteilerleitung (34) der Backe (20) über einen Verteilerraum (33) mit einer Verteilerleitung (32) in der Halterung (11) verbunden ist.

5. Übertragungselement nach einem der Ansprüche 1 bis 4,
**dadurch gekennzeichnet, dass** die Grundplatte (12) der Backe (20) mit einer austauschbaren seitlichen Kontakteinlage (21) versehen ist, während der Arm (13) der Backe (20) mit einer austauschbaren vorderen Kontakteinlage (22) versehen ist.

## Revendications

1. La partie coulissante du mécanisme de dépôt de l'appareil servant à former le verre, comprenant au moins une mâchoire (20) avec une base (12) ainsi qu'une rampe (13), tout en sachant que dans le domaine de la mâchoire (20) se trouve calée une buse (23) pour l'arrivée d'air sous pression parvenant de la conduite d'amenée centrale (31), la buse (23) est disposée dans le coin entre la base (12) et la rampe (13), **caractérisée en ce, que** la buse (23) est disposée dans la partie inférieure du coin et qu'elle est orientée vers le haut, parallèlement avec la rampe (13).

2. La partie coulissante, selon la revendication 1, **caractérisée en ce, que** la mâchoire (20) est posée de telle façon sur le manche (11) afin qu'elle puisse être ajustée.

3. La partie coulissante, selon la revendication 2, **caractérisée en ce, que** le manche (11) est pourvu d'au moins une rainure de serrage de forme horizontale (27), dans laquelle est posée une matrice de la vis de fixation (24), la matrice pouvant être ajustée (29) afin d'être en mesure de fixer la mâchoire ajustable (20) au manche (11).

4. La partie coulissante selon l'une quelconque des revendications 2 à 3, **caractérisée en ce, que** la buse (23) est connectée au canal de séparation (34) dans la mâchoire (20) et que le canal de séparation (34) dans la mâchoire (20) est connecté par l'espace de séparation (33) au canal de séparation (32) dans le manche (11).

5. La partie coulissante selon l'une quelconque des revendications 1 à 4, **caractérisée en ce, que** la base (12) de la mâchoire (20) est pourvue d'une cale de contact latérale échangeable (21) et que la rampe (13) de la mâchoire (20) est pourvue d'une cale de contact frontale échangeable (22).
